# EUROPÄISCHE PATENTSCHRIFT

(11) **EP 1 115 796 B1**
(45) Veröffentlichungstag und Bekanntmachung des Hinweises auf die Patenterteilung: **15.01.2003**
(21) Anmeldenummer: 99944642.0
(22) Anmeldetag: 13.09.1999
(51) Int. Cl.: C09C 1/30, C09C 1/00

(54) **PIGMENTGEMISCH MIT HOHER LICHTDIFFUSION**
PIGMENT MIXTURE HAVING A HIGH LIGHT DIFFUSION
MELANGES DE PIGMENTS A DIFFUSION ELEVEE DE LA LUMIERE

(30) Priorität: 14.09.1998 DE 19842134
(43) Veröffentlichungstag der Anmeldung: 18.07.2001
(73) Patentinhaber: MERCK PATENT GmbH, 64293 Darmstadt (DE)
(72) Erfinder: ANSELMANN, Ralf, D-67305 Ramsen (DE); KNAPP, Martin, D-64807 Dieburg (DE); HILLGÄRTNER, Uta, D-64293 Darmstadt (DE)
(86) Internationale Anmeldenummer: EP9906751
(87) Internationale Veröffentlichungsnummer: WO00015720

(56) Entgegenhaltungen:
- EP-A- 0 803 550
- DATABASE WPI Week 199340 Derwent Publications Ltd., London, GB; AN 1993-317707 XP002123853 & JP 05 230394 A (KAO CORP.), 7. September 1993 (1993-09-07)

## Beschreibung

Die Erfindung betrifft ein Pigmentgemisch insbesondere für kosmetische Formulierungen, daß einerseits der menschlichen Haut ein natürliches Aussehen verleiht, andererseits aber die Falten weitestgehend unsichtbar macht.

Viele Verbraucherinnen sind unzufrieden mit dem künstlichen Erscheinungsbild, das durch kommerzielle Make-ups erzeugt wird. Sie besitzen zwar eine faltenabdeckende Wirkung, doch das natürliche Aussehen der Haut geht dabei verloren.

In kommerziellen Make-ups werden vielfach Perlglanzpigmente verwendet, die zur Verminderungen ihres Glanzes mit Bariumsulfat oder kolloidalem Titandioxid vermischt oder beschichtet werden.

JP 06-056 628 beschreibt ein kosmetisches Puder, das aus Titandioxid beschichteten Glimmer, der zusätzlich eine Deckschicht aus Siliziumdioxid besitzt, besteht.

JP 10-087 433 beschreibt ein Make-up, das aus einem Perlglanzpigment besteht, das mit einem kugelförmigen Material, beispielsweise Siliziumdioxid, Calciumsilikat oder einem organischen Polymer, beschichtet ist. Die Partikelgröße wird mit 10 bis 50 nm angegeben.

Die Verwendung von Perlglanzpigmenten hat den Nachteil, daß ein signifikanter Anteil an gerichteter Reflexion aufgrund der plättchenförmigen Struktur die optische Wirkung von Falten verstärkt.

Aufgabe der Erfindung ist es, ein Pigmentgemisch bereitzustellen, dessen Brechzahl an die Brechzahl der menschlichen Haut und deren koloristischen Eigenschaften angepaßt ist und das das reflektierte und transmittierte Licht optimal streut.

Diese Aufgabe wurde gelöst durch ein Pigmentgemisch enthaltend
(i) 70-99,9 Gew.% einer Komponente A, bestehend aus kugelförmigen Siliziumdioxid mit einem Durchmesser von kleiner als 50 µm, beschichtet mit Titandioxid und optional einer weiteren Schicht aus SiO₂, und
(ii) 0,1-30 Gew.% einer Komponente B, bestehend aus kugelförmigen Siliziumdioxid mit einem Durchmesser von kleiner als 50 µm, beschichtet mit Titandioxid als erster Schicht und Eisen-(III)-oxid als zweiter, äußerer Schicht, wobei das Pigmentgemisch eine Zusammensetzung von 80,5 bis 84,5 Gew.% SiO₂, 14,4 bis 18,5 Gew.% TiO₂ und 0,1 bis 1 Gew.% Fe₂O₃ aufweist und die Brechzahl des Pigmentgemisches auf einen Wert zwischen 1,45 und 1,65 eingestellt wird.

Weiterhin wird diese Aufgabe gemäß der Erfindung gelöst durch ein Verfahren zur Herstellung des erfindungsgemäßen Pigmentgemisches, indem in einer ersten Verfahrensstufe kugelförmiges Siliziumdioxid mit einem Durchmesser von kleiner als 50 µm mit Titandioxid beschichtet wird und in einer zweiten Verfahrensstufe zu der erhaltenen Suspension der Komponente A bei einem pH-Wert von 4 bis 9 die Komponente B, die vorher durch Beschichten von kugelförmigen Siliziumdioxid mit einem Durchmesser von kleiner als 50 µm mit Titandioxid als erster Schicht und Eisen-(III)-oxid als zweiter, äußerer Schicht hergestellt wurde, in Pulverform, ungeglüht unter Rühren zugegeben wird bis ein Bunttonwinkel von 70 bis 85° erreicht ist, und das Gemisch für weitere 10 bis 30 Minuten gerührt wird und das erhaltene Pigment vom Reaktionsmedium abgetrennt, gewaschen, getrocknet und bei 500 bis 900 °C kalziniert wird.

In einer besonderen Ausführungsform des Verfahrens wird die Komponente A nach der Beschichtung mit Titandioxid noch zusätzlich mit Siliziumdioxid beschichtet.

Gegenstand der Erfindung ist außerdem die Verwendung des enfindungsgemäßen Pigmentes in Formulierungen, insbesondere in Farben, Lacken, Druckfarben, für die Lasermarkierung, für die Saatgutbeschichtung, in kosmetischen Formulierungen, wie z.B. Make-ups, Gesichtspuder, Lippenstifte, Zahncreme, Emulsionsprodukte, als Peeling-Zusatz, in Cremes und flüssigen Pudern.

Als Ausgangsprodukt für die Herstellung des Pigmentes wird kugelförmiges Siliziumdioxid eingesetzt. Bedingt durch das Herstellungsverfahren besitzen die Kugeln keinen einheitlichen Durchmesser sondern ein Verteilungsspektrum bezüglich ihrer Partikelgröße. Geeignet als Ausgangsprodukt sind Fraktionen, bei denen 99 % der Partikel kleiner als 50 µm sind. Bevorzugt werden Fraktionen, bei denen 95 % der Partikel kleiner als 35 µm und besonders bevorzugt werden Fraktionen, bei denen 90 % der Partikel kleiner als 20 µm sind.

Die Herstellung von kugelförmigem Siliziumdioxid ist bekannt. Sie erfolgt durch Hydrolyse organischer oder anorganischer Siliziumverbindungen in einem Emulsionsverfahren. Derartige Verfahren sind beispielsweise in DE 21 55 281, DE 26 10 852, GB 1 141 924 und EP 0 162 716 beschrieben. Kugelförmiges Siliziumdioxid ist kommerziell verfügbar. Unter der Bezeichnung Ronasphere® wird von Merck KGaA kugelförmiges Siliziumdioxid mit einer Partikelgröße von kleiner 20 µm angeboten.

Die Beschichtung des kugelförmigen Siliziumdioxids mit Titandioxid, Eisenoxid und Siliziumdioxid erfolgt nach bekannten Verfahren.

Die Beschichtung mit Titandioxid erfolgt nach dem in U.S. 3,553,001 und EP 0 803 550 beschriebenen Verfahren. Dabei wird zu der auf 50-100 °C, insbesondere 70-80 °C, erhitzten Suspension des kugelförmigen Siliziumdioxids langsam eine wäßrige Titansalzlösung zugegeben und es wird durch gleichzeitiges Zudosieren einer Base, wie z.B. wäßrige Ammoniaklösung oder eine wäßrige Alkalilauge, ein weitgehend konstanter pH-Wert von etwa 0,5-5, insbesondere etwa 1,5-2,5 eingehalten. Sobald die gewünschte Schichtdicke der TiO₂-Fällung erreicht ist, wird die Zugabe der Titansalzlösung gestoppt.

Dieses, auch als Titrationsverfahren bezeichnete Verfahren zeichnet sich dadurch aus, daß ein Überschuß an Titansalz vermieden wird. Das wird dadurch erreicht, daß man pro Zeiteinheit nur eine solche Menge der Hydrolyse zuführt, wie sie für eine gleichmäßige Beschichtung mit dem hydratisierten TiO₂ erforderlich ist und wie pro Zeiteinheit von der verfügbaren Oberfläche der zu beschichtenden Teilchen aufgenommen werden kann. Es entstehen deshalb keine hydratisierten Titandioxidteilchen, die nicht auf der zu beschichtenden Oberfläche niedergeschlagen sind. Die pro Minute zugesetzte Titansalzmenge liegt dabei in der Größenordnung von etwa 0,01 bis 2·10⁻⁴ Mol Titansalz pro Quadratmeter zu belegender Oberfläche.

Bei der Beschichtung mit Eisen-(III)-oxid kann sowohl von Eisen(III)-salzen als auch von Eisen(II)-salzen, allein oder als Gemisch, ausgegangen werden, wie es zum Beispiel in U.S. 3,087,828 und U.S. 3,087,829 beschrieben ist. In der U.S. 3,874,890 wird der zunächst gebildete Überzug von Eisen(II)-hydroxid zum Eisen(III)-oxid-hydrat oxidiert. Bevorzugt wird von Eisen(III)-salzen ausgegangen. Hierzu wird einer wäßrigen Suspension des mit Titandioxid beschichteten kugelförmigen Siliziumdioxids bei einer Temperatur von 60 bis 90 °C und bei einem pH-Wert von 2,5 bis 4,5 eine Eisen(III)-chloridlösung zudosiert. Der pH-Wert wird durch gleichzeitige Dosierung von 32%iger Natronlauge konstant gehalten. Dieses Verfahren ist in DE 196 18 568 beschrieben.

Für das Aufbringen der Siliziumdioxidschicht auf das mit Titandioxid beschichtete kugelförmige Siliziumdioxid wird bevorzugt das in DE 196 18 569 beschriebene Verfahren angewendet. Zu einer auf etwa 50-100 °C, insbesondere 70-80 °C erhitzten Suspension des zu beschichtenden Materials wird eine Natronwasserglaslösung zudosiert. Durch gleichzeitige Zugabe von 10%iger Salzsäure wird der pH-Wert bei 4 bis 10, vorzugsweise bei 6,5 bis 8,5 konstant gehalten. Nach Zugabe der Wasserglaslösung wird noch 30 min nachgerührt.

Die Herstellung des Pigmentgemisches erfolgt in mehreren Stufen. Zunächst erfolgt in einer ersten Stufe die Herstellung der Komponente B, indem das kugelförmige Siliziumdioxid zuerst mit Titandioxid und anschließend mit Eisenoxid beschichtet wird. Nach erfolgter Beschichtung wird das Produkt aus dem Reaktionsmedium abgetrennt, gewaschen und getrocknet.

In einer zweiten Stufe erfolgt die Herstellung der Komponente A, indem kugelförmiges Siliziumdioxid mit Titandioxid und gegebenenfalls Siliziumdioxid beschichtet wird. Das beschichtete Material wird im Beschichtungsmedium belassen.

In einer dritten Stufe wird die nur getrocknete und nicht kalzinierte Komponente B in Pulverform der noch im Beschichtungsmedium verbliebenen Komponente A unter Rühren zudosiert, bis der gewünschte Bunttonwinkel erreicht ist. Der Bunttonwinkel der nassen Mischung wird dabei auf 70°-85°, bevorzugt 76°-78° eingestellt. Danach wird das Gemisch abgetrennt, gewaschen, getrocknet und bei 500 bis 900 °C kalziniert. Der Bunttonwinkel des so erhaltenen Pigmentes liegt im Bereich von 65°-80°, bevorzugt 70°-74°. Der L-Wert des Pigmentes beträgt 80°-90°, bevorzugt 87°-88°. Da das Mischen der beiden Komponenten nach Bunttonwinkel erfolgt, schwankt das Mischungsverhältnis von Charge zu Charge.

Ein bevorzugtes Pigmentgemisch enhält 85 - 99 Gew.% Komponente A und 1 - 15 Gew.% Komponente B, insbesondere 90 - 95 % Komponente A und 5 - 10 Gew.% Komponente B.

Um den gewünschten Bunttonwinkel des Pigmentes erreichen zu können, ist Voraussetzung, daß der L-Wert der Komponente A über 80 liegt.

Das erfindungsgemäße Pigmentgemisch hat vorzugsweise folgende Zusammensetzung:

| | |
|---|---|
| SiO₂ | 80,5 bis 84,5 Gew.% |
| TiO₂ | 14,4 bis 18,5 Gew.% |
| Fe₂O₃ | 0,1 bis 1 Gew.% |

Die Brechzahl des Pigmentgemisches wird auf 1,45 bis 1,65 eingestellt. Das wird durch die Beschichtung mit Titandioxid, wie in DE 42 19 287 näher beschrieben, erreicht.

Das erfindungsgemäße Pigmentgemisch kann in allen pflegenden und dekorativen Kosmetikprodukten, insbesondere in kosmetischen Formulierungen, wie z.B. Make-ups, Korrekturstifte, Gesichtspudern, Lippenstiften, Emulsionsprodukte, und flüssigen Pudern in einer Konzentration von 1 bis 20 Gew.%, bevorzugt 8 bis 12 Gew.%, eingearbeitet werden. Die Konzentration des Pigmentgemisches in losen Pulvern beträgt sogar 0,1 bis 80 Gew.%.

Bei der Verarbeitung des erfindungsgemäßen Pigmentgemisches muß im allgemeinen keine besondere Einarbeitungsmethode angewandt werden. Es zeichnet sich durch eine sehr gute Dispergierbarkeit, pH- und HitzeStabilität aus und läßt sich problemlos mit allen denkbaren Kosmetikstoffen verarbeiten. Das Pigmentgemisch ist in Öl- und Wasserphasen dispergierbar und verteilt sich in Pulvermischungen außergewöhnlich gut. Aufgrund seiner neutralen Körperfarbe und seiner hohen Transparenz trägt es dazu bei den Hautglanz nach dem Auftragen zu vermindern und Fältchen optisch zu glätten.

Das erfindungsgemäße Pigmentgemisch kann zur Pigmentierung von Lacken, Pulverlacken, Farben, Druckfarben, Kunststoffen, Agrarfolien, Saatgutbeschichtungen und in kosmetischen Formulierungen, wie z.B. Lippenstiften, Nagellacken, kosmetische Stifte, Preßpuder, Make-ups, Shampoos, lose Puder und Gele, verwendet werden.

Die Konzentration des Pigmentgemisches im zu pigmentierenden Anwendungssystem liegt in der Regel zwischen 0,1 und 70 Gew.%, vorzugsweise zwischen 0,1 und 50 Gew.% und insbesondere zwischen 1,0 und 20 Gew.%, bezogen auf den Gesamtfestkörpergehalt des Systems. Sie ist in der Regel abhängig vom konkreten Anwendungsfall.

Kunststoffe enthalten das erfindungsgemäße Pigmentgemisch in Mengen von 0,01 bis 50 Gew.%, vorzugsweise von 0,01 bis 25 Gew.%, insbesondere von 0,1 bis 7 Gew.%, bezogen auf die Kunststoffmasse.

Im Lackbereich wird das Pigmentgemisch, in Mengen von 0,1 bis 30 Gew.%, vorzugsweise 1 bis 10 Gew.%, bezogen auf die Lackdispersion, eingesetzt

Bei der Pigmentierung von Bindemittelsystemen z.B. für Farben und Druckfarben für den Tiefdruck, Offsetdruck oder Siebdruck, oder als Vorprodukt für Druckfarben, z.B. in Form von hochpigmentierten Pasten, Granulaten, Pellets, etc., haben sich insbesondere Pigmentgemische mit sphärischen Farbmitteln, wie z.B. TiO₂, Ruß, Chromoxid, Eisenoxid sowie organische "Farbpigmente", als besonders geeignet erwiesen. Das Pigmentgemisch wird in der Regel in die Druckfarbe in Mengen von 2-35 Gew.%, vorzugsweise 5-25 Gew.%, und insbesondere 8-20 Gew.% eingearbeitet. Offsetdruckfarben können das Pigmentgemisch bis zu 40 Gew.% und mehr enthalten. Die Vorprodukte für die Druckfarben, z.B. in Granulatform, als Pellets , Briketts, etc., enthalten neben dem Bindemittel und Additiven bis zu 95 Gew.% des erfindungsgemäßen Pigmentgemisches. Druckfarben enthaltend das erfindungsgemäße Pigmentgemisch zeigen reinere Farbtöne und sind aufgrund der guten Werte für die Viskosität besser verdruckbar.

Gegenstand der Erfindung sind somit auch Formulierungen enthaltend das erfindungsgemäße Pigmentgemisch.

Die nachfolgenden Beispiele sollen die Erfindung näher erläutern, ohne sie zu begrenzen.

### Beispiele

### Beispiel 1

122,7 g kugelförmiges Siliziumdioxid (Ronasphere®, Hersteller: Merck KGaA) werden in 2277 g vollentsalztem Wasser suspendiert und die Suspension auf 75 °C unter Rühren erhitzt. Dann werden 88,5 g Titantetrachloridlösung (TiCl₄-Gehalt: 64,4 Gew.%) mit 90 g vollentsalztem Wasser verdünnt und über einen Zeitraum von 60 min mit einer Dosiergeschwindigkeit von 1 ml/min und anschließend mit einer Geschwindigkeit von 2 ml/min der Suspension zudosiert. Durch Zugabe von 32%iger Natronlauge wird der pH-Wert bei 2,2 bis 2,3 konstant gehalten. Nachdem die Titantetrachloridlösung zudosiert ist, wird der pH-Wert auf 3,2 eingestellt. Anschließend werden 50,4 g Eisen(III)-chloridlösung, die mit 50,4 g Wasser verdünnt ist, mit einer Geschwindigkeit von 0,6 ml/min der Suspension zugegeben, wobei durch Zugabe von 32%iger Natronlauge der pH-Wert auf 3,2 bis 3,3 konstant gehalten wird. Anschließend wird noch 15 min nachgerührt und der pH-Wert auf 7,0 eingestellt.

Über Nacht läßt man die Suspension abkühlen und absitzen. Die über dem Bodenkörper befindliche Lösung wird abdekantiert und verworfen. Der Bodenkörper wird über eine Nutsche isoliert, mit 5 l vollentsalztem Wasser salzfrei gewaschen, bei 110 °C im Trockenschrank über Nacht getrocknet und über ein 0,3 mm Sieb gegeben. Man erhält 154 g der Komponente B.

9,2 kg kugelförmiges Siliziumdioxid (Ronasphere®, Hersteller: Merck KGaA) werden in 170 I vollentsalztem Wasser suspendiert und die Suspension unter Rühren auf 75 °C erhitzt. Dann werden 10,43 I Titantetrachloridlösung mit 3 I vollentsalztem Wasser verdünnt und über einen Zeitraum von 60 min mit einer Geschwindigkeit von 0,075 l/min und anschließend mit einer Geschwindigkeit von 0,150 l/min der Suspension zudosiert. Durch Zugabe von 32%iger Natronlauge wird der pH-Wert bei 2,2 bis 2,3 konstant gehalten. Nachdem die Titantetrachloridlösung zudosiert ist, wird noch 15 min nachgerührt und der pH-Wert auf 7,0 eingestellt. Die so hergestellte Komponente A wird im Reaktor belassen.

Anschließend werden 715 g der getrockneten und gesiebten Komponente B zur Suspension der Komponente A in den Reaktor gegeben. Das Gemisch wird 15 min gerührt und über Nacht abkühlen und absitzen gelassen. Nach dem Abdekantieren der überstehenden Lösung wird der Bodenkörper über ein Einschichtfilter abfiltriert und mit 1000 I vollentsalztem Wasser salzfrei gewaschen. Das erhaltene Pigment wird über Nacht bei 110 °C getrocknet und bei 650 °C in einem Drehrohrofen mit einer Verweilzeit von 15 min kalziniert. Man erhält ein wollweißes Pulver mit sehr gutem Hautgefühl.

### Beispiel 2

| Tagescreme | | | | |
|---|---|---|---|---|
| Phase | Zusammensetzung | Handelsname | Hersteller | % |
| A | Silica, Cl 77891 | Ronasphere® LDP | (1) | 10,00 |
| | (Titanium Dioxide), Cl 77491 (Iron Oxides) | | | |
| | Magnesium Aluminium Silicate | Veegum HV | (5) | 1,00 |
| | Methyldibromo Glutaronitrile, Phenoxyethanol | Euxyl K 400 | (2) | 0,10 |
| | Sorbitol | Karion F flüssig | (1) | 3,00 |
| | Aqua (Water) | Wasser, demineralisiert | | 48,44 |
| B | Methylparaben | Methyl-4-hydroxybenzoat | (1) | 0,18 |
| | Propylparaben | Propyl-4-hydroxybenzoat | (1) | 0,08 |
| | Propylene Glycol | 1,2-Propandiol | (1) | 3,00 |
| C | Glyceryl Stearate, PEG-100 Stearate | Arlacel 165 | (4) | 5,00 |
| | Cetearyl Alcohol | Lanette O | (6) | 1,50 |
| | Caprylic Capric Triglyceride | Miglyol 812 | (1) | 7,00 |
| | Butyrospermum Parkii (Shea Butter) | Sheabutter | (8) | 2,00 |
| | Cetearyl Isononanoate | Cetiol SN | (6) | 7,00 |
| | Octyldodecanol | Eutanol G | (6) | 7,50 |
| | Cetearyl Glucoside, Cetearyl Alcohol | Emulgade PL 68/50 | (6) | 2,00 |
| D | Parfum | Parfümöl 200530 | (3) | 0,20 |
| | Cyclomethicone | Dow Corning 345 | (7) | 2,00 |
| | Citric Acid | Citronensäure | (1) | q.s. |

### Herstellung:

Phase B mischen und erwärmen bis die Lösung klar ist. Veegum im Wasser der Phase A dispergieren, restliche Rohstoffe zugeben, auf 80 °C erhitzen und Phase B zugeben. Phase C mischen und auf 80 °C erhitzen. Anschließend Phase C zu Phase A/B geben und homogenisieren. Unter Rühren auf 40 °C abkühlen und Phase D zugeben. Der pH-Wert wird mit 10 %-iger Citronensäure auf 6 eingestellt.

### Bezugsquellen:

| | |
|---|---|
| (1) Merck KGaA | (5) Monsato |
| (2) Schülke & Mayr | (6) Henkel KGaA |
| (3) Fragrance Resources | (7) Dow Coming |
| (4) ICI | (8) E. H. Wagner |

### Beispiel 3

| Augencreme | | | | |
|---|---|---|---|---|
| Phase | Zusammensetzung | Handelsname | Hersteller | % |
| A | Silica, Cl 77891 (Titanium Dioxid), Cl 77491 (Iron Oxides) | Ronasphere® LDP | (1) | 10,00 |
| | Stearyl Alcohol, Steareth-7, Steareth-10 | Emulgator E 2155 | (2) | 5,50 |
| | Prunus Amygdalus Dulcis (Sweet Almond Oil) | Mandelöl süß | (3) | 2,40 |
| | Octyl Palmitate | Ceraphyl 368 | (4) | 5,80 |
| | Hydrogenated Microcrystalline Wax, Polycyclopentadiene | Lunacera MWN | (5) | 2,40 |
| | Isopropyl Stearate | Isopropylstearate | (1) | 2,40 |
| | Tocopheryl Acetate | DL-α-Tocopherolacetat | (1) | 0,10 |
| | Retinyl Palmitate | Vitamin A palmitat | (1) | 0,05 |
| | Propylparaben | Propyl-4-hydroxybenzoat | (1) | 0,05 |
| B | Glycerin | Glycerin | (1) | 3,80 |
| | Methylparaben | Methyl-4-hydroxybenzoat | (1) | 0,15 |
| | Aqua (Water) | Wasser, demineralisiert | | 66,95 |

### Herstellung:

Phasen A und B auf 75 °C erwärmen und rühren bis alle Bestandteile vollständig gelöst sind. Phase B unter Rühren zu Phase A geben.
Anschließend homogenisieren. Unter Rühren auf Raumtemperatur abkühlen.

### Bezugsquellen:

(1) Merck KGaA
(2) Th. Goldschmidt AG
(3) Henkel KGaA
(4) H. B. Fuller GmbH

### Beispiel 4

| Cream to Powder | | | | |
|---|---|---|---|---|
| Phase | Zusammensetzung | Handelsname | Hersteller | % |
| A | Silica, Cl 77891 (Titanium Dioxide), Cl 77491 (Iron Oxides) | Ronasphere® LDP) | (1) | 10,00 |
| | Mica, Cl 17891 (Titanium Dioxide) | Extender W | (1) | 12,00 |
| | Mica, Cl 77492 (Iron | Microna Matte | (1) | 4,80 |
| | Oxides) | Yellow | | |
| | Cl 77491 (Iron Oxides), | Microna® Matte | (1) | 0,80 |
| | Mica | Red | | |
| | Cl 77499 (Iron Oxides) | Microna® Matte Black | (1) | 0,60 |
| | Mica, Cl 77491 (Iron | Microna® Matte | (1) | 0,40 |
| | Oxides) | Orange | | |
| | Talc | Talkum | (1) | 6,40 |
| | Lauroyl Lysine | Amihope LL | (2) | 1,50 |
| | Aluminum Starch Octenylsuccinate | Dry Flow PC | (3) | 14,40 |
| B | Octyl Palmitate | Ceraphyl 368 | (4) | 29,00 |
| | Mineral Oil, Lanolin Alcohol | Amerchol L-101 | (5) | 2,50 |
| | Copernicia Cerifera (Camauba Wax) | Carnaubawachs | (6) | 1,30 |
| | Ceresin | Lunacera W 80 | (7) | 2,00 |
| | Hydrogenated Castor Oil | Cutina HR | (8) | 3,50 |
| | Phenyl Trimethicone | Dow Corning 556 | (9) | 9,50 |
| | Sorbitan Sesquioleate | Arlacel 83 | (10) | 0,50 |
| | Tocopheryl Acetate | DL-α-Tocopherolacetat | (1) | 0,50 |
| | Propylparaben | Propyl-4-hydroxybenzoat | (1) | 0,20 |
| | PEG-8, Tocopherol, Ascorbyl Palmitate, Ascorbic Acid, Citric Acid | Oxynex K flüssig | (1) | 0,10 |

### Herstellung:

Alle Bestandteile der Phase B bei 85 °C zusammen aufschmelzen. Nach und nach werden die Bestandteile der Phase A eingerührt. Die homogene Schmelze unter Rühren auf ca. 80 °C abkühlen und in Pfannen gießen.

### Bezugsquellen:

| | |
|---|---|
| (1) Merck KGaA | (6) Kahl |
| (2) Lehmann & Voss & Co. | (7) H. B. Fuller GmbH |
| (3) National Starch and Chemical Limited | (8) Henkel KGaA |
| (4) Van Dyk | (9) Dow Corning |
| (5) Amerchol | (10) ICl |

### Beispiel 5

| Lippenpflegestift | | | | |
|---|---|---|---|---|
| Phase | Zusammensetzung | Handelsname | Hersteller | % |
| A | Silica, Cl 77891 (Titanium Dioxide), Cl 77491 (Iron Oxides) | Ronasphere® LDP | (1) | 10,00 |
| B | Caprylic/Capric Triglyceride | Miglyol 812 Neutralöl | (2) | 12,00 |
| | Cera Alba (Beeswax) | Bienenwachs | (1) | 11,00 |
| | Panthotenyl Ethyl Ether | Pantothenyl Ethyl Ether | (3) | 1,00 |
| | Ceresin. Copernicio Cerifera (Camauba Wax) | Lunacera C 44 | (4) | 7,00 |
| | Lanolin | Adeps Lanae SP | (5) | 3,50 |
| | Isopropyl Myristate | Isopropylmyristat | (1) | 4,00 |
| | Paraffinum Liquidum (Mineral Oil) | Paraffin dickflüssig | (1) | 2,10 |
| | PEG-8, Tocopherol, Ascorbyl Palmitate, Ascorbic Acid, Citric Acid | Oxynex K flüssig | (1) | 0,03 |
| | Propylparaben | Propyl-4-hydroxybenzoat | (1) | 0,07 |
| | Ricinus Communis (Castor Oil) | Rizinusöl | (5) | 49,30 |

### Herstellung:

Die Bestandteile der Phase B werden auf 75 °C erhitzt und aufgeschmolzen. Ronasphere® LDP wird zugegeben und alles gut durchgerührt. Die Lippenstiftmasse wird dann in der auf 65 °C temperierten Gießapparatur 15 Minuten gerührt. Die homogene Schmelze wird in die auf 55 °C vorgewärmten Gießformen gegossen. Anschließend kühlt man die Formen ab und entfernt die Gießlinge kalt. Nach Erwärmen der Lippenstifte auf Raumtemperatur werden die Lippenstifte kurz abgeflammt.

### Bezugsquellen:

(1) Merck KGaA
(2) Hüls AG
(3) Fuji Chemical Industries
(4) H. B. Füller
(5) Henry Lamotte

### Beispiel 6

| Handcreme | | | | |
|---|---|---|---|---|
| Phase | Zusammensetzung | Handelsname | Hersteller | % |
| A | Silica, Cl 77891 (Titanium Dioxide), Cl 77491 (Iron Oxides) | Ronasphere® LDP | (1) | 10,00 |
| | Sorbitan Isostearate, PEG-2 Hydrogenated Castor Oil, Ozokerite, Hydrogenated Castor Oil | Arlacel 582 | (2) | 3,20 |
| | PEG-40 Sorbitan Peroleate | Arlatone T | (2) | 0,80 |
| | Paraffinum Liquidum | Paraffin | (1) | 12,00 |
| | (Mineral Oil) | dünnflüssig | | |
| | Isopropyl Myristate | Isopropylmyristat | (1) | 4,00 |
| | Bisabolol | (-)-α-Bisabolol | (1) | 0,30 |
| | Propylparaben | Propyl-4-hydroxybenzoat | (1) | 0,10 |
| B | Glycerin | Glycerin | (1) | 3,00 |
| | Magnesium Sulfate | Magnesiumsulfatheptahydrat | (1) | 0,50 |
| | Methylparaben | Methyl-4-hydroxybenzoat | (1) | 0,20 |
| | Allantoin | Allantoin | (1) | 0,10 |
| | Aqua (Water) | Wasser, demineralisiert | | 65,80 |

### Herstellung:

Phasen A und B auf 75 °C erwärmen und rühren bis alle Bestandteile vollständig aufgelöst sind. Phase B unter Rühren zu Phase A geben. Anschließend homogenisieren. Unter Rühren auf Raumtemperatur abkühlen.

### Bezugsquellen:

(1) Merck KGaA
(2) ICI

## Patentansprüche

1. Pigmentgemisch mit hoher Lichtdiffusion, **dadurch gekennzeichnet, dass** es
(i) 70 - 99,9 Gew. % einer Komponente A, bestehend aus kugelförmigem Siliziumdioxid mit einem Durchmesser von kleiner als 50 µm, beschichtet mit Titandioxid und optional einer weiteren Schicht aus Siliziumdioxid, und
(ii) 0,1 - 30 Gew. % einer Komponente B, bestehend aus kugelförmigem Siliziumdioxid mit einem Durchmesser von kleiner als 50 µm, beschichtet mit Titandioxid als erster Schicht und Eisen-(III)-oxid als zweiter, äußerer Schicht, enthält
wobei das Pigmentgemisch eine Zusammensetzung von 80,5 bis 84,5 Gew. % SiO₂, 14,4 bis 18,5 Gew. % TiO₂ und 0,1 bis 1 Gew. % Fe₂O₃ aufweist und die Brechzahl des Pigmentgemisches auf einen Wert zwischen 1,45 und 1,65 eingestellt wird.

2. Verfahren zur Herstellung des Pigmentgemisches nach Anspruch 1, **dadurch gekennzeichnet, dass** in einer ersten Verfahrensstufe kugelförmiges Siliziumdioxid mit einem Durchmesser von kleiner als 50 µm mit Titandioxid beschichtet wird und in einer zweiten Verfahrensstufe zu der erhaltenen Suspension der Komponente A bei einem pH-Wert von 4 bis 9 die Komponente B, die vorher durch Beschichten von kugelförmigem Siliziumdioxid mit einem Durchmesser von kleiner als 50 µm mit Titandioxid als erster Schicht und Eisen-(III)-oxid als zweiter, äußerer Schicht hergestellt wurde, in Pulverform ungeglüht unter Rühren zugegeben wird bis ein Bunttonwinkel von 70 bis 85° erreicht ist, und das Gemisch für weitere 10 bis 30 Minuten gerührt und das erhaltene Pigment vom Reaktionsmedium abgetrennt, gewaschen, getrocknet und bei 500 bis 900 °C kalziniert wird.

3. Verfahren nach Anspruch 2, **dadurch gekennzeichnet, dass** die Komponente A nach der Beschichtung mit Titandioxid noch zusätzlich mit Siliziumdioxid beschichtet wird.

4. Verwendung des Pigmentgemisches nach Anspruch 1 in Farben, Lacken, Pulverlacken, Druckfarben, Kunststoffen, Agrarfolien, für die Lasermarkierung, als Saatgutbeschichtung und in kosmetischen Formulierungen.

5. Formulierungen enthaltend ein Pigmentgemisch nach Anspruch 1.

## Claims

1. Highly light-scattering pigment mixture, **characterized in that** it comprises
(i) 70-99.9% by weight of a component A consisting of spherical silicon dioxide with a diameter of less than 50 µm, coated with titanium dioxide and optionally a further layer of silicon dioxide, and
(ii) 0.1-30% by weight of a component B consisting of spherical silicon dioxide with a diameter of less than 50 µm, coated with titanium dioxide as a first layer and iron(III) oxide as a second, outer layer,
the pigment mixture being composed of from 80.5 to 84.5% by weight of SiO₂, from 14.4 to 18.5% by weight of TiO₂ and from 0.1 to 1% by weight of Fe₂O₃ and the refractive index of the pigment mixture being adjusted to a value of between 1.45 and 1.65.

2. Process for preparing the pigment mixture according to Claim 1, **characterized in that**, in a first stage of the process, spherical silicon dioxide with a diameter of less than 50 µm is coated with titanium dioxide and, in a second stage of the process, the resulting suspension of the component A is admixed, with stirring and at a pH of from 4 to 9, with the uncalcined powder form of the component B, which has been prepared beforehand by coating spherical silicon dioxide having a diameter of less than 50 µm with titanium dioxide as a first layer and iron(III) oxide as a second, outer layer, until a hue angle of from 70 to 85° has been reached, and the mixture is stirred for a further 10 to 30 minutes, and the pigment obtained is separated from the reaction medium, washed, dried and calcined at from 500 to 900°C.

3. Process according to Claim 2, **characterized in that** the component A, after coating with titanium dioxide, is additionally coated with silicon dioxide.

4. Use of the pigment mixture according to Claim 1 in paints, varnishes, powder coatings, printing inks, polymers, agricultural films, for laser marking, as a seed coating, and in cosmetic formulations.

5. Formulations comprising a pigment mixture according to Claim 1.

## Revendications

1. Mélange de pigments à diffusion élevée de la lumière; **caractérisé en ce qu'**il contient
(i) 70-99,9 % en poids d'un composant A, constitué par du dioxyde de silicium sphérique d'un diamètre inférieur à 50 µm, revêtu de dioxyde de titane et, optionnellement, d'une couche supplémentaire de dioxyde de silicium et
(ii) 0,1 - 30 % en poids d'un composant B, constitué par du dioxyde de silicium sphérique d'un diamètre inférieur à 50 µm, revêtu d'une première couche de dioxyde de titane et d'une deuxième couche extérieure d'oxyde de fer(III),
où le mélange de pigments présente une composition constituée par 80,5 à 84,5 % en poids de SiO₂, 14,4 à 18,5 % en poids de TiO₂ et 0,1 à 1 % en poids de Fe₂O₃ et où l'indice de réfraction du mélange de pigments est réglé à une valeur située entre 1,45 et 1,65.

2. Procédé pour la fabrication du mélange de pigments selon la revendication 1, **caractérisé en ce que** dans la première phase du procédé, le dioxyde de silicium sphérique d'un diamètre inférieur à 50 µm est revêtu de dioxyde de titane et que dans la deuxième phase du procédé l'on ajoute, en agitant, à la suspension obtenue du composant A à un pH de 4 à 9, le composant B sous forme de poudre non calcinée, fabriquée auparavant en revêtant le dioxyde de silicium sphérique d'un diamètre inférieur à 50 µm avec une première couche d'oxyde de titane et une deuxième couche extérieure d'oxyde de fer (III), jusqu'à ce qu'un angle HUE de 70 à 85° est atteint, et que le mélange est agité pendant 10 à 30 minutes supplémentaires et que le pigment obtenu est séparé du milieu réactif, lavé, séché et calciné entre 500 et 900°C.

3. Procédé selon la revendication 2, **caractérisé en ce que** le composant A est revêtu, après son revêtement avec le dioxyde de titane, avec une couche supplémentaire de dioxyde de silicium.

4. Utilisation du mélange de pigments selon la revendication 1 dans des couleurs, laques, laques en poudre, encres d'imprimerie, matières plastiques, bâches agricoles, dans le marquage laser, revêtements de semences et dans des formulations cosmétiques.

5. Formulations contenant un mélange de pigments selon la revendication 1.
